# EUROPÄISCHE PATENTSCHRIFT

(11) **EP 1 777 060 B1**
(45) Veröffentlichungstag und Bekanntmachung des Hinweises auf die Patenterteilung: **09.12.2009**
(21) Anmeldenummer: 06021639.7
(22) Anmeldetag: 16.10.2006
(51) Int. Cl.: B29C 67/24, B29C 39/00, B29B 7/76

(54) **Verfahren und Vorrichtung zum Giessen von Thermoplastischen Materialien**
Method and apparatus for casting thermoplastic materials
Procédé et appareil pour couler des matériaux thermoplastiques

(30) Priorität: 18.10.2005 DE 102005051205
(43) Veröffentlichungstag der Anmeldung: 25.04.2007
(73) Patentinhaber: Ahmad, Mazouri, Dipl.-Ing. (FH), 73479 Ellwangen (DE)
(72) Erfinder: Mazouri, Ahmad, 73479 Ellwangen (DE)
(74) Vertreter: Patentanwälte Ruff, Wilhelm, Beier, Dauster & Partner

(56) Entgegenhaltungen:
- EP-A1- 1 325 801
- DE-U- 7 331 433
- DE-U1- 29 924 673
- DE-U1-202004 014 099
- JP-A- 61 121 903

## Beschreibung

Die Erfindung betrifft ein Verfahren und eine Vorrichtung zum Herstellen von Gegenständen aus thermoplastischem Polymermaterial.

Die Herstellung von Gegenständen aus thermoplastischem Polymermaterial ist seit langem bekannt. Das Polymermaterial wird aus mindestens zwei Ausgangsmonomeren hergestellt. Dabei werden die beiden Ausgangsmaterialien erwärmt, anschließend gemischt und zu Granulat verarbeitet. Dies geschieht fabrikmäßig. Anschließend muss das Granulat zu der Stelle transportiert werden, wo der Gegenstand hergestellt werden soll. Hier wird das Granulat nochmals erhitzt und entweder extrudiert oder in eine Form spritzgegossen. Beim Spritzgießen werden erhebliche Drücke aufgebaut. Diese Art der Herstellung hat den Nachteil, dass das Material zweimal mit sehr großem Aufwand erwärmt und verarbeitet werden muss. Für eine Großserienherstellung ist diese Methode des Vorgehens durchaus geeignet.

Bei Polyurethan ist als Alternative zum Spritzgießen das Gießen dieses Materials in Formen bereits bekannt. Polyurethan ist aber beim Recycling und Umfüllen nicht umweltfreundlich. Außerdem können Produkte aus diesem Material nicht überall eingesetzt werden.

Es ist bereits ein Verfahren und eine Vorrichtung zum Herstellen von gegossenen Kunststoffgegenständen bekannt (EP 1325801). Dabei werden thermoplastische Zwischenprodukte in jeweils einen eigenen Behälter eingefüllt. In jedem Behälter wird das Zwischenprodukt gemischt und erhitzt. Anschließend werden die Zwischenprodukte in einen Mischer zur Bildung eines Polymeres gedrückt. Aus diesen Mischer gelangen sie dann in die Form.

Ebenfalls bekannt ist eine Misch-und Dosiervorrichtung, bei der in Kartuschen angeordnete Materialien mithilfe von Kolbenpressen aus den Kartuschen heraus gepresst werden (DE 7331433 U).

Der Erfindung liegt die Aufgabe zu Grunde, eine wirtschaftlich durchführbare Möglichkeit zu schaffen, Gegenstände auch im Einzelverfahren oder bei Kleinserien aus thermoplastischem Polymermaterial herzustellen.

Zur Lösung dieser Aufgabe schlägt die Erfindung ein Verfahren mit den im Anspruch 1 genannten Merkmalen vor. Die Erfindung schlägt ebenfalls eine Vorrichtung zur Durchführung dieses Verfahrens vor.

Das Verfahren besteht also darin, die mindestens zwei monomeren Stammkomponenten des thermoplastischem Polymermaterials an Ort und Stelle zu erhitzen, zu vermischen und in erhitztem Zustand in eine Form einzugießen. Dies kann je nach Material mit geringem Druck erfolgen, so dass nur Formen mit geringerer Festigkeit benötigt werden. Diese lassen sich einfach herstellen. Die vollständige Polymerisation kann dann in der Form selbst erfolgen.

Es werden keine Formen mit hoher Festigkeit mehr benötigt.

Durch die Verwendung der monomeren Stammkomponenten an Ort und Stelle ist es möglich, schnell durch Auswechseln der Stammkomponenten Gegenstände aus Polymermaterial mit den unterschiedlichsten Eigenschaften herzustellen, da nicht mehr mit großen Chargen gearbeitet werden muss.

Insbesondere schlägt die Erfindung in Weiterbildung vor, die monomeren Stammkomponenten in Kartuschen einzubringen, so dass der Benutzer an Ort und Stelle durch Auswahl der Kartusche mit dem entsprechenden Inhalt seine Produkte mit den gewünschten Eigenschaften versehen kann. Kartuschen sind in Form und Größe handelsüblichen Gegenstände.

Beispielsweise kann in Weiterbildung der Erfindung vorgesehen sein, dass eine Stammkomponente einen Aktivator und/oder die zweite Stammkomponenten einen Katalysator enthält.

Beispielsweise kann ebenfalls in Weiterbildung vorgesehen sein, das als eine Stammkomponente Caprolactam verwendet wird.

Durch die Verwendung von Stammkomponenten an Ort und Stelle ist es ebenfalls möglich, Additive in beliebigen Kombinationen hinzuzufügen.

Durch die Unterbringung der Stammkomponenten in Kartuschen ist es auch sehr einfach möglich, wie die Erfindung in Weiterbildung vorschlägt, die Stammkomponenten zu vermischen. Es ist hierzu nur erforderlich, die Stammkomponenten aus der Kartusche heraus zu drücken, was mit einfachen Mitteln möglich ist. Das aus den Kartuschen heraus gedrückte Material kann dann einfach in einen Mischer eingedrückt werden, an dessen Ausgang die Form angeordnet wird. Auch die Erhitzung des Materials in den Kartuschen ist einfach, da Kartuschen üblicherweise als zylindrische Behälter ausgebildet sind, die sich mit Heizeinrichtungen relativ leicht erwärmen lassen.

Es ist möglich, die beiden Stammkomponenten gemeinsam zu erhitzen, beispielsweise auch auf die gleiche Temperatur. Es ist ebenfalls möglich, die beiden Stammkomponenten gemeinsam unter Druck zu setzen, gegebenenfalls auch getrennt. Es kann der gleiche oder auch ein unterschiedlicher Druck angewendet werden, je nach Anwendungsfall.

Die Stammkomponenten können in gleich großen oder unterschiedlich großen Kartuschen angeordnet werden.

Die von der Erfindung vorgeschlagene Vorrichtung zum Durchführen dieses Verfahrens enthält eine Halterung für mindestens zwei Behälter, in denen die beiden Stammkomponenten zur Herstellung des Polymermaterials untergebracht sind. Die Vorrichtung enthält weiterhin eine Heizeinrichtung, um die beiden Behälter und dadurch ihren Inhalt zu erwärmen. Die Behälter sind vorzugsweise so gehaltert, dass sie sich leicht austauschen lassen. Eine Druckeinrichtung ist in der Vorrichtung ebenfalls vorgesehen, um den Inhalt der Behälter durch jeweils einen Auslass aus dem Behälter heraus zu drücken, wobei am Auslass der Behälter ein statischer oder dynamischer Mischer für Kunststoffmaterial angeordnet ist. Der Eingang in den Mischer wird über eine Medienleitung mit dem Auslass aus den Behältern verbunden. Am Ausgang des Mischers ist ein Anschluss für eine Gießform angeordnet oder vorgesehen, in der der herzustellende Gegenstand durch Eingießen der gemischten Stammkomponenten erzeugt wird.

Die Einrichtung zur Druckerzeugung kann beispielsweise so ausgebildet sein, dass sie mit Hilfe eines motorischen oder von Hand betriebenen Antriebs auf einen in den Kartuschen vorhandenen Kolben einwirkt, um dadurch das Material aus den Kartuschen heraus zu pressen. Dies kann mit einer Zahnstange erfolgen, an der ein Zahnrad angreift. Ebenfalls möglich ist es, dass an dem Kolben der Kartusche und eine Feder angreift, die beim Einsetzen der Kartusche in die Vorrichtung einmal gespannt wird und dann konstant auf den Kolben einwirkt. Eine weitere Möglichkeit besteht darin, dass in einem abgeschlossenen Raum innerhalb der Vorrichtung mit Hilfe eines Kompressors ein Überdruck erzeugt wird, der dann ebenfalls auf den Kolben in den Kartuschen einwirkt.

Insbesondere kann die Halterung für die Kartuschen derart ausgebildet sein, dass die Kartuschen dann, wenn sie in die Halterung eingesetzt werden, mit ihren Auslassstutzen in Aufnahmen der Medienleitung eingreifen, so dass dann eine weitere Positionierung nicht mehr erforderlich ist. In der Medienleitung bzw. der Halterung können Öffner vorhanden sein, mit denen der zunächst verschlossene Auslassstutzen der Kartusche geöffnet werden kann.

Insbesondere können in der Medienleitung auch Rückschlagventile angeordnet sein.

Es kann vorgesehen sein, dass die Medienleitung und/oder der Mischer von der Heizeinrichtung ebenfalls erwärmt wird, so dass das Material dann auch glatt durch die Medienleitung und den Mischer hindurch geht.

Es kann vorgesehen sein, dass die Vorrichtung eine Halterung für mehr als zwei Kartuschen aufweist. In diesem Fall kann die Medienleitung ein Umschaltventil aufweisen, um beispielsweise Additive hinzuzufügen oder die Zusammensetzung des entstehenden Polymermaterials zu ändern.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Figur 1: eine schematische Darstellung einer Vorrichtung zum Durchführen des erfindungsgemäßen Verfahrens;
- Figur 2: die parallele Anordnung zweier Kartuschen;
- Figur 3: die Anordnung zweier ineinander verschachtelter Kartuschen;
- Figur 4: die Anordnung zweier Kartuschen axial hintereinander.

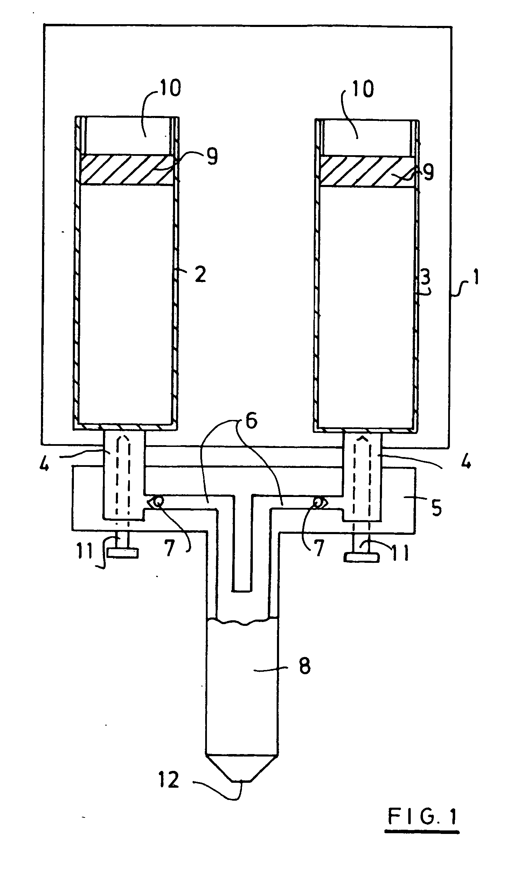

Figur 1 zeigt stark vereinfacht eine Vorrichtung, mit der es möglich ist, in eine Form die beiden Ausgangsmaterialien zur Erzeugung eines Gegenstandes aus thermoplastischem Polymermaterial einzugießen. Die Vorrichtung enthält in einem Behälter 1 zwei Kartuschen 2, 3, in deren Innerem das Ausgangsmaterial zur Bildung des Polymers enthalten ist. Die beiden Kartuschen 2, 3 sind so angeordnet, dass ihr jeweiliger Auslassstutzen 4 in einen Mischeraufnehmer 5 hinein ragt, in dem eine Medienleitung 6 ausgebildet ist.

Von dem Auslassstutzen 4 der eine Kartusche 2 führt die Medienleitung 6, die direkt hinter dem Auslassstutzen 4 ein Rückschlagventil 7 enthält, in den Mischer 8 hinein, in dem eine Vermischung dieses aus der Kartusche 2 stammenden Materials mit dem aus der Kartusche 3 stammenden Material durchgeführt wird. Auch die Kartusche 3 ist mit ihrem Auslassstutzen 4 in den Mischeraufnehmer 5 eingesetzt. Radial bezüglich dieses Auslassstutzens 4 führt eine Abzweigung der Medienleitung 6, die ebenfalls ein Rückschlagventil 7 enthält, in das Innere des Mischers 8.

In die Kartuschen 2, 3 wurde vorher unter Schutzgas das entsprechende Ausgangsmaterial eingebracht, anschließend ein Abdichtdeckel 9 eingesetzt, an den sich ein Auspresskolben 10 anschließt. Der Abdichtdeckel 9 dient dazu, das in der Kartusche enthaltene Material luftdicht abzuschließen. Der Auspresskolben 10 greift dann an dem Abdichtdeckel 9 an.

Wenn die Kartuschen 2, 3 in die Vorrichtung eingesetzt sind, sind sie zunächst an ihrem Auslassstutzen 4 geschlossen. Die Mischeraufnahme 5 enthält in Verlängerung der Auslassstutzen jeweils einen Öffner 11, der von der Außenseite der Mischeraufnahme 5 eingedrückt werden kann, um die Kartuschen zu öffnen.

Die Vorrichtung enthält weiterhin eine Heizeinrichtung, beispielsweise eine elektrisch betätigte Heizschlange oder dergleichen, die aus Gründen der Vereinfachung in der Figur 1 nicht dargestellt ist. Dieser Heizeinrichtung heizt die Kartuschen, die beispielsweise aus Metall bestehen. Dadurch gelangt die Wärme auch in das Innere der Kartuschen und kann das dort enthaltene Material erwärmen. Die Heizeinrichtung kann ebenfalls so ausgebildet sein, dass sie die Mischeraufnahme 5 und noch den Mischer 8 erwärmt.

Weiterhin enthält die Vorrichtung eine nicht dargestellte Druckerzeugungseinrichtung, mit deren Hilfe das in den Kartuschen 2, 3 enthaltene Material durch die Auslässe 4 in den Mischer 8 gedrückt werden kann. Diese Druckeinrichtung kann beispielsweise ein Druckluftanschluss sein, der im Inneren des Behälters 1 einem Überdruck erzeugt. Durch diesen Überdruck, der insbesondere auf die Auspresskolben 10 wirkt, wird das erwärmte Material aus den Kartuschen heraus in den Mischer gedrückt, wo es sich vermischt. Der Mischer 8 weist einen Ausgang 12 auf, aus dem dann das aus den beiden Stammmaterialien gemischte Material in eine Gießform gegossen werden kann.

In der Form polymerisiert das Material dann aus. Dadurch entsteht der herzustellende Gegenstand.

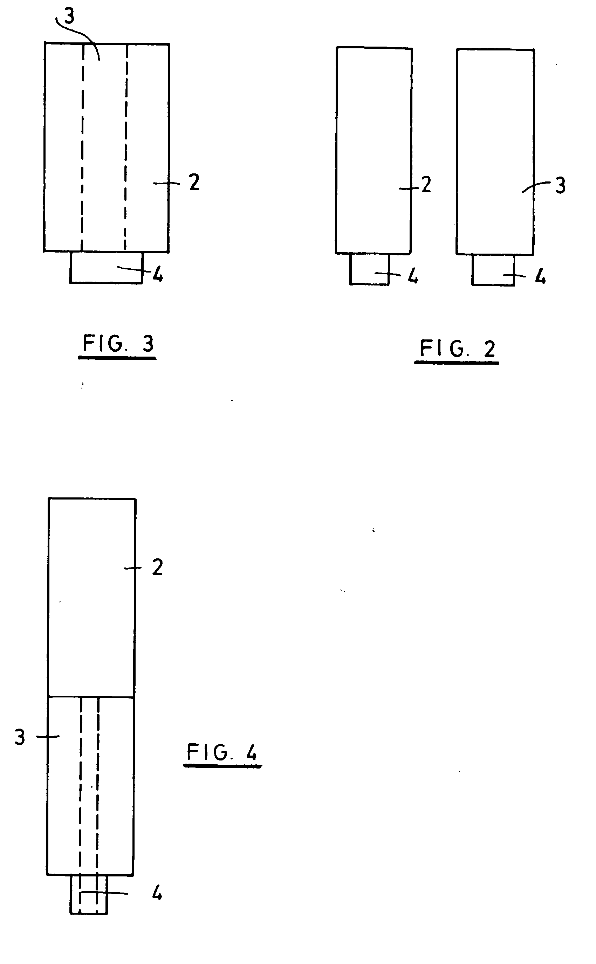

Die Anordnung der Kartuschen innerhalb des Behälters 1 kann beispielsweise so sein, wie es in Figur 1 dargestellt ist. Hier sind, ähnlich wie dies schematisch in Figur 2 dargestellt ist, die beiden Kartuschen nebeneinander und parallel zueinander angeordnet. Entsprechend muss auch die Mischeraufnahme 5 gestaltet sein, die ja die Verbindung zwischen dem Inhalt der Kartuschen und dem Mischer herstellt. Die Anordnung der beiden Kartuschen 2, 3 nebeneinander hat den Vorteil, dass hier die beiden Kartuschen auch unabhängig voneinander ausgetauscht werden können. Darüber hinaus stehen für beide Kartuschen die gesamte Oberflächen zum Erwärmen ihres Inhalts zur Verfügung.

Eine weitere Art der Anordnung der Kartuschen ist in Figur 3 dargestellt. Hier sind die beiden Kartuschen koaxial ineinander angeordnet. Entsprechend muss auch die Mischeraufnahme geändert werden.

Bei der Anordnung der Figur 4 sind die beiden im Durchmesser gleichen Kartuschen hintereinander angeordnet, wobei der Auslass aus der einen Kartusche 2 durch die andere Kartusche 3 mittig hindurch führt. Dadurch ist der Inhalt der Kartusche 3 kleiner als der Inhalt der Kartusche 2, wenn beide die gleiche Länge aufweisen. Auch bei der Anordnung der Figur 4 stehen für die beiden Kartuschen die gesamte Oberflächen zum Wärmeübergang zur Verfügung.

## Patentansprüche

1. Verfahren zum Herstellen von Gegenständen aus thermoplastischem Polymermaterial, mit folgenden Verfahrensschritten:
a) eine monomere in einer ensten Kartusche (2) angeordnete erste Stammkomponente wird in der ersten Kartusche (2) erhitzt,
b) eine zweite von der ersten Stammkomponente getrennte in einer zweiten Kartusche (3) angeordnete Stammkomponente wird in der zweiten Kartusche (3) erhitzt,
c) beide Stammkomponenten werden, in erhitztem Zustand aus ihren Kartuschen (2, 3) heraus gedrückt, in einen gemeinsamen Mischer (8) gedrückt und dort vermischt und
d) in eine Form zum Herstellen des Gegenstandes eingegossen, wobei
e) die Polymerisation der beiden Stammkomponenten in der Form erfolgt.

2. Verfahren nach Anspruch 1, bei dem eine Stammkomponente einen Aktivator enthält.

3. Verfahren nach Anspruch 1 oder 2, bei dem eine Stammkomponente einen Katalysator enthält.

4. Verfahren nach einem der vorhergehenden Ansprüche, bei dem als eine Stammkomponente Caprolactam verwendet wird.

5. Verfahren nach einem der vorhergehenden Ansprüche, bei dem mindestens einer Stammkomponente mindestens ein Additiv zugesetzt wird.

6. Verfahren nach einem der vorhergehenden Ansprüche, bei dem die Stammkomponenten in luftdicht abgeschlossene Kartuschen (2, 3) abgefüllt werden.

7. Verfahren nach einem der vorhergehenden Ansprüche, bei dem eine Form zur Herstellung des Gegenstands unmittelbar an den Ausgang des Mischers (8) angeschlossen wird.

8. Verfahren nach einem der vorhergehenden Ansprüche, bei dem die beiden Stammkomponenten gemeinsam erhitzt werden.

9. Verfahren nach einem der vorhergehenden Ansprüche, bei denen die beiden Stammkomponenten gemeinsam unter Druck gesetzt werden.

10. Vorrichtung zum Herstellen von Gegenständen aus thermoplastischem Polymermaterial, zur Durchführung des Verfahrens nach einem der vorhergehenden Ansprüche, mit
einer Halterung für mindestens zwei Kartuschen (2, 3),
einer Heizeinrichtung für die mindestens zwei Kartuschen (2, 3),
einer Druckerzeugungseinrichtung zum Ausdrücken des Inhalts der beiden Kartuschen (2, 3) durch deren Auslass (4),
einem statischen und/oder dynamischen Mischer (8) für Kunststoff,
einer die Auslässe (4) der Kartuschen (2, 3) mit dem Eingang des Mischers (8) verbindenden Medienleitung (6), sowie mit einem Anschluss für die Gießform des Gegenstands.

11. Vorrichtung nach Anspruch 10, bei der die Druckerzeugungseinrichtung derart ausgebildet ist, dass sie einen in den Kartuschen (2, 3) angeordneten Kolben (10) motorisch, pneumatisch oder mechanisch verschiebt.

12. Vorrichtung nach Anspruch 10 oder 11, bei der die Halterung für die Kartuschen (2, 3) derart ausgebildet ist, dass die Kartuschen (2, 3) mit ihren Auslassstutzen (4) in eine Aufnahme der Medienleitung (6) eingreifen.

13. Vorrichtung nach einem der Ansprüche 10 bis 12, mit einem Öffner (11) für den Auslassstutzen (4) jeder Kartusche (2, 3).

14. Vorrichtung nach einem der Ansprüche 10 bis 13, bei der die Heizeinrichtung derart ausgebildet ist, dass sie auch die Medienleitung (6) und/oder den Mischer (8) heizt.

15. Vorrichtung nach einem der Ansprüche 10 bis 14, bei der bei einer Halterung von mehr als zwei Kartuschen (2, 3) in der Medienleitung (6) ein Umschaltventil angeordnet ist.

## Claims

1. A process of manufacturing objects of thermoplastic polymer material, with the following process steps:
a) a monomer of the first parent component disposed in the first cartridge (2) is heated in the first cartridge (2),
b) a second component, separated from the first parent component disposed in the second cartridge (3) is heated in the second cartridge (3),
c) both parent components are pressed out of their cartridges (2, 3) in the heated state, are pressed into a common mixer (8) and mixed therein and
d) poured into a mould for manufacturing the object, whereby
e) the polymerisation of the two parent components occurs inside the form

2. The process according to Claim 1, in which a parent component contains an activator.

3. The process according to Claim 1 or 2, in which a parent component contains a catalyst.

4. The process according to one of the preceding claims, in which caprolactam is used as a parent component.

5. The process according to one of the preceding claims, in which at least one additive is added to at least one parent component.

6. The process according to one of the preceding claims, in which the parent components are filled into hermetically sealed cartridges (2, 3).

7. The process according to one of the preceding claims, in which a mould for manufacturing the object is connected directly to the outlet of the mixture (8).

8. The process according to one of the preceding claims, in which the two parent components are heated together.

9. The process according to one of the preceding claims, in which the two parent components are put under pressure together.

10. An apparatus for manufacturing objects of thermoplastic polymer material, for carrying out the process according to one of the preceding claims, with
a holder for at least two cartridges (2, 3),
a heating device for at least two cartridges (2, 3),
a pressure developing device for ejecting the content of the two cartridges (2, 3) through their outlet (4),
a static and/or dynamic mixer (8) for plastic,
a media line (6) connecting the outlets (4) of the cartridges (2, 3) with the inlet of the mixer (8), as well as with
a connection for the mould of the object

11. The apparatus according to Claim 10, in which the pressure developing device is formed such that it displaces a piston (10) disposed in the cartridges (2, 3) using either a motor drive, or a pneumatic drive or a mechanical drive.

12. The apparatus according to Claim 10 or 11, in which the holder for the cartridges (2, 3) is formed such that the outlet nozzles (4) of the cartridges (2, 3) engage in a receptacle of the media line (6).

13. The apparatus according to one of Claims 10 to 12, with an opener (11) for the outlet nozzles (4) of each cartridge (2, 3).

14. The apparatus according to one of Claims 10 to 13, in which the heating device is formed such that it also heats the media line (6) and/or the mixer (8).

15. The apparatus according to one of Claims 10 to 14, in which a switch-over valve is disposed in a holder of more than two cartridges (2, 3) inside the media line (6).

## Revendications

1. Procédé servant à fabriquer des objets en matière polymère thermoplastique, passant par les étapes suivantes :
a) on fait chauffer dans une première cartouche (2) une première composante initiale monomère située dans la première cartouche (2),
b) on fait chauffer dans une deuxième cartouche (3) une deuxième composante initiale séparée de la première composante initiale et située dans ladite deuxième cartouche (3),
c) par compression, on force les deux composantes initiales à l'état échauffé à sortir hors de leur cartouche respective (2, 3), à gagner sous l'effet de la pression un mélangeur conjoint (8) où a lieu leur mélange et
d) les coule dans un moule servant à fabriquer l'objet, sachant que
e) la polymérisation des deux composantes initiales a lieu dans le moule.

2. Procédé selon la revendication 1, dans lequel une composante initiale contient un activateur.

3. Procédé selon la revendication 1 ou 2, dans lequel une composante initiale contient un catalyseur.

4. Procédé selon l'une des revendications précédentes, dans lequel on utilise du caprolactame à titre de composante initiale.

5. Procédé selon l'une des revendications précédentes, dans lequel on ajoute au moins un additif à au moins une composante initiale.

6. Procédé selon l'une des revendications précédentes, dans lequel les composantes initiales sont soutirées dans des cartouches obturée hermétiques à l'air (2, 3).

7. Procédé selon l'une des revendications précédentes, dans lequel on raccorde directement à la sortie du mélangeur (8) un moule servant à fabriquer l'objet.

8. Procédé selon l'une des revendications précédentes, dans lequel on fait chauffer ensemble les deux composants initiaux.

9. Procédé selon l'une des revendications précédentes, dans lequel on met les deux composantes initiales ensemble sous pression.

10. Dispositif servant à fabriquer des objets en matériau polymère thermoplastique, à réaliser le procédé selon l'une des revendications précédentes, comprenant
une fixation recevant au moins deux cartouches (2, 3),
un équipement de chauffage destiné à au moins deux cartouches (2, 3),
un équipement générateur de pression pour chasser le contenu des deux cartouches (2, 3) par leur orifice de sortie (4) respectif,
un mélangeur statique et/ou dynamique (8) de matière plastique,
une conduite (6) de média reliant les sorties (4) des cartouches (2, 3) à l'entrée du mélangeur (8), ainsi que comprenant
un raccord affecté au moule servant à couler l'objet.

11. Dispositif selon la revendication 10, dans lequel l'équipement générateur de pression présente une configuration telle qu'il déplace par moteur, air comprimé ou mécanisme interposé un piston (10) situé dans chaque cartouche (2, 3).

12. Dispositif selon la revendication 10 ou 11, dans lequel la fixation des cartouches (2, 3) est configurée de sorte que les embouts (4) de sortie des cartouches (2, 3) pénètrent dans un réceptacle de la conduite (6) de média.

13. Dispositif selon l'une des revendications 10 à 12, avec un dispositif (11) servant à ouvrir l'embout de sortie (4) de chaque cartouche (2, 3).

14. Dispositif selon l'une des revendications 10 à 13, dans lequel l'équipement de chauffage est configuré de sorte à chauffer aussi la conduite de média (6) et/ou le mélangeur (8).

15. Dispositif selon l'une des revendications 10 à 14, dans lequel une vanne commutatrice a été intercalée dans la conduite (6) de média dans le cas où la fixation retient plus de deux cartouches (2, 3).
